Europäisches Patentamt

European Patent Office

Office européen des brevets

(11) Veröffentlichungsnummer: **0 002 435**
**A1**

(12) # EUROPÄISCHE PATENTANMELDUNG

(21) Anmeldenummer: 78100963.4

(22) Anmeldetag: 22.09.78

(51) Int. Cl.²: **G 08 C 23/00**
**H 03 J 1/00**
**//G10L1/04**

(30) Priorität: 14.12.77 DE 2755633

(43) Veröffentlichungstag der Anmeldung:
27.06.79 Patentblatt 79 13

(84) Benannte Vertragsstaaten:
BE CH DE FR GB NL SE

(71) Anmelder: LOEWE OPTA GMBH
Industriestrasse 11 Postfach 220
D-8640 Kronach(DE)

(72) Erfinder: Ruppertsberg, Siegfried R.
Weinstrasse 1
D-8630 Coburg(DE)

(54) **Fernsteuerung zum Steuern, Ein- und Umschalten von variablen und festen Gerätefunktionen und Funktionsgrössen in nachrichtentechnischen Geräten.**

(57) Bei einem Fernbedienungsgeber für eine Fernsteuerung zum Steuern, Ein- und Umschalten von variablen und festen Gerätefunktionen in nachrichtentechnischen Geräten sind Bedientasten vorgesehen, bei deren Betätigung Funktionsgeneratoren eingeschaltet werden, deren Signale amplituden- oder frequenzmoduliert zum zu steuernden Empfangsgerät übertragen, demoduliert und den jeweiligen Funktionsstellern zugeführt werden.

Um die Steuerbefehle auch ohne Tastendruck eingeben zu können, ist im Fernbedienungsgeber ein Sprachanalysator (2) angeordnet, der mit einem Mikrofon (1) verbunden ist, in welches akustische Befehle eingegeben werden. Die nach Frequenz und Wortteilen ausgewerteten akustischen Befehle werden mit gespeicherten Vergleichssignalen verglichen und bewirken bei Übereinstimmung, daß ein Steuerbefehl von der Sendestufe (4) an einen zu steuernden Empfänger mit einer Empfangsschaltung (5) übertragen wird. Die Einstellinformationen werden nach Decodierung Funktionsstellern (7a bis 7d) zugeführt.

./...

Fig.1

- 1 -

**Fernsteuerung zum Steuern, Ein- und Umschalten von variablen und festen Gerätefunktionen und Funktionsgrößen in nachrichtentechnischen Geräten**

Die Erfindung bezieht sich auf eine Fernsteuerung nach dem Oberbegriff des Anspruchs 1.

Fernsteuerungen kommen in der modernen Unterhaltungselektronik immer mehr zur Anwendung. Vorwiegend werden derartige Fernsteuerungen in Verbindung mit Fernsehempfangsgeräten eingesetzt, um dem Zuschauer beim Fernsehen eine Anpassung der variablen Gerätefunktionen, wie Lautstärke, Bildhelligkeit, Kontrast und dergl., sowie eine Kanalumschaltung nach den individuellen Wünschen zu ermöglichen, ohne daß die Funktionen direkt am Fernsehapparat eingestellt werden müssen. Darüber hinaus werden auch andere Funktionen in einem Fernsehgerät über Fernbedienungen, die die Befehlssignale drahtlos oder drahtgebunden übertragen können, gesteuert. Z.B. ist es bei Fernsehgeräten mit Fernsehspielschaltung üblich, die Funktionen der Fernsehspielschaltung über eine drahtgebundene Fernbedienung zu betätigen. Es ist auch vorgeschlagen worden, diese Bedienung drahtlos zu ermöglichen, um ortsunabhängiger zum Fernsehgerät hin sein zu können.

Die Weiterentwicklung von Fernsehgeräten hat auch neue
Einsatzmöglichkeiten erschlossen, z.B. werden teils im
Versuch und teils auch bereits kommerziell Texte und
Informationen von zentralen Datenbanken übertragen und
durch Abruf auf dem Fernsehschirm sichtbar (Teletext,
Viewdata usw.), der dann die Funktion eines Monitors
übernimmt. Um den Bedienungskomfort solcher Geräte ebenfalls
dem derzeitigen Standard anzupassen, sind die Fernbedienungsgeber in der Regel auch mit zusätzlichen Tasten für derartige
Zwecke versehen.

Zur Erhöhung des Bedienungskomforts von Rundfunkempfangsgeräten, insbesondere Hifi-Geräten, ist es ebenfalls
bereits bekannt, Fernbedienungen einzusetzen, um dem
Zuhörer eine individuelle Anpassung der variablen Größen,
wie Lautstärke, Bässe, Höhen, Balance und dergl., an jedem
Ort eines Raumes zu ermöglichen, wobei die Klanganpassung
aus räumlichen Gründen stets individuell erfolgen muß.

Moderne Übertragungsverfahren bei drahtlosen und drahtgebundenen Fernbedienungen gestatten die serielle Steuerung
einer Vielzahl von Funktionen. Es ist z.B. bei einem
bekannten Fernsteuersystem möglich, mit ein und derselben
Fernbedienung ca. 60 Funktionen zu steuern, so daß die
Fernbedienung sowohl für die Ansteuerung eines Fernsehgerätes
als auch zur gleichzeitigen Ansteuerung eines Rundfunkempfangsgerätes oder anderer im Sende/Empfangsbereich der
Fernsteuerung angeordneter fernsteuerbarer Geräte mit
gleichem Übertragungssystem, wie Raumlichtsteuerung,
Verdunklungen und dergl., verwendet werden kann. Der
Erweiterung der Funktionssteuerungen durch digitale
Techniken und digitale Übertragungstechniken für mannigfaltige Anwendungen sind dabei praktisch keine Grenzen
gesetzt, da auch auf der Empfangsseite der Fernbedienung
mittels moderner Computertechnik eine weitergehende Ausnutzung einzelner übertragener Signale durch Befehlsumschaltungen erfolgen kann, z.B. die Ausnutzung des
Fernsehgerätes als Monitor für einen Rechner, wobei die
Fernbedienung die Rechnertastatur beinhaltet. Um die
Funktionen steuern zu können, muß der Fernbedienungsgeber
neben der Vielzahl von Übertragungskanälen, Codierstufen
und dergl. über eine entsprechende Anzahl von Funktionssteuertasten verfügen. Zieht man in Betracht, daß für jede
zu steuernde variable Funktion mindestens zwei Tasten bzw.
Sensoren oder andere Stellglieder (+, -) notwendig sind und
allein bei einem Fernsehgerät in der Regel drei bis vier
variable Gerätefunktionen gesteuert werden, bei Hifi-Geräten
noch mehr, so ist es verständlich, daß eine Fernbedienung,
die einen vielseitigen Bedienungskomfort ermöglichen soll,
eine Vielzahl von Stellgliedern, Tasten, Sensoren und dergl.
aufweisen muß, die eine übersichtliche, handliche Bedienung
nicht mehr gewährleisten. Hinzu kommt, daß bei Umschalten
auf einzelne Funktionen in manchen Fällen im Empfänger vorbereitende Funktionen ausgelöst werden müssen, die zusätzliche Tasten notwendig machen, z.B. zum Empfang von Teletext
oder Viewdata, die eine Reihe von Funktionsbetätigungen
erforderlich machen, damit die anzuschließende externe
Datenbank auch tatsächlich die gewünschten Daten an den
Empfänger überträgt und diese auf dem Monitor sichtbar
werden.

Die Befehlseingabe mittels Tastaturen, Stellgliedern und
Analogstellern, wie Schiebewiderstände und Drehpotentiometer, setzt stets voraus, daß der Bedienende die Funktionszuordnung der einzelnen Tasten und Steller kennt und diese
optimal zu seinem Nutzen und seinen individuellen Wünschen
entsprechend zu bedienen versteht. Die Praxis hat gezeigt,
daß bei immer mehr Bedienungsfunktionen, die mit einer
Fernbedienung, gleich welcher Bauart, gesteuert und

- 4 -

geregelt werden können, Fehlbedienungen häufig auftreten und
für einen Durchschnittsanwender die Einstellung völlig
unübersichtlich ist.

Der Erfindung liegt die Aufgabe zugrunde, die Fernsteuerung
von nachrichtentechnischen Geräten weitergehend zu vereinfachen, ohne daß Umschaltungen von Funktionstasten zur
gleichzeitigen Betätigung anderer Funktionen notwendig sind,
ohne daß zusätzliche Tasten für zusätzliche Funktionen vorgesehen sein müssen, und daß eine Vielzahl von Funktionen
auf einfache Weise durch Eingabe von akustischen Befehlen
gesteuert werden kann.

Die Aufgabe wird erfindungsgemäß nach der im Kennzeichen
des Anspruchs 1 angeführten Lehre gelöst.

Vorteilhafte Weiterbildungen der Erfindung und im Zusammenwirken mit einem Computer im Fernbedienungsgeber sind in den
Unteransprüchen beschrieben.

Die Erfindung geht von bekannten Sprachanalysatorschaltungen
aus, die durch Vergleich mit eingegebenen Frequenzen es
gestatten, eine Sprache nach ihrem Inhalt zu analysieren
und die Befehle in Mehrbitinformationen umzusetzen.
Derartige Anlagen sind bekannt und werden auf vielfache
Weise bereits verwendet. Die Integration der Bauteile
gestattet, daß ein solcher Sprachanalysator so klein gebaut
werden kann, daß er auch funktionell und rationell in
handliche Fernbedienungen in nachrichtentechnischen Geräten
einsetzbar ist. Soll ein Fernbedienungsgerät mit einer derartigen Befehlseingabe universell einsetzbar sind, d.h.
gleichzeitig zur Funktionssteuerung mehrerer Gerätefunktionen
und anderer Bedienfunktionen von anderen Geräten dienen,
sowie als Rechner einsetzbar sein, so sieht die Erfindung
den Einbau eines Computers vor, in den die umgesetzten Wortbefehle eingelesen werden. Der Computer kann darüber
hinaus über Paralleleingänge auch mit anderen Digitalinformationen belegt werden, z.B. der manuellen Abstimmung auf
verschiedene Empfangskanäle in nachrichtentechnischen
Geräten. Es ist zweckmäßig, um eine Vielfalt auszunutzen,
den Computer durch ein Dateneinlesegerät auf verschiedene
Programme umschalten zu können, wozu in das Datenlesegerät
ein Datenträger eingeführt werden muß, auf dem die bestimmten
Programme eingeschrieben sind. Die Übertragung der nach
akustisch elektrischer Umsetzung erzeugten Mehrbitwörter
und nach Aufrechnung derselben bei Anwendung eines Computers
erfolgt in an sich bekannter Weise durch Frequenz- oder
Amplitudenmodulation, wobei der Träger z.B. bei drahtlosen
Fernbedienungen Infrarotlicht oder Ultraschall sein kann.

Die Erfindung wird nachfolgend anhand der in den Zeichnungen
dargestellten Ausführungsbeispiele näher beschrieben.
In den Zeichnungen zeigen:

   Fig. 1 einen Sende- und Empfangsteil einer Fernbedienung mit einem erfindungsgemäß vorgesehenen
          Sprachanalysator,

   Fig. 2 den Sendeteil einer Fernsteuerung mit einem
          Sprachanalysator und in Verbindung mit einem
          Computer zur Aufrechnung verschiedener Stellfunktionen und Rechenprogramme,

   Fig. 3 einen Empfangsteil für eine computergesteuerte
          Fernbedienung und

   Fig. 4 ein Blockschaltbild für eine Sichtanzeige
          an der Fernbedienung.

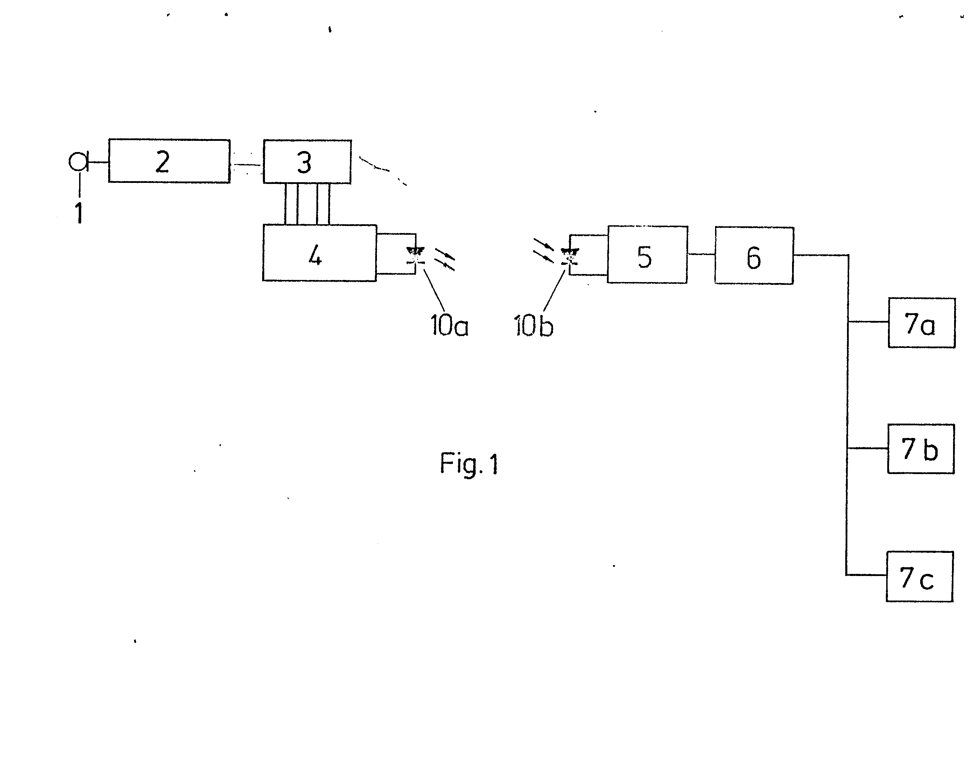

In dem Blockschaltbild gemäß Fig. 1 ist ein Mikrofon 1 dargestellt, das mit einem Sprachanalysator 2 verbunden ist. Der Sprachanalysator 2 weist Redundanzschaltungen auf, die die Frequenzen nach bestimmten Werten beschneiden. Durch internen Vergleich mit gespeicherten Werten werden bei Koinzidenz oder durch direkte Umsetzung Signale bestimmten Inhalts, z.B. Mehrbitwerte, erzeugt. Dem Sprachanalysator ist ein n-Coder 3 nachgeschaltet. Dieser kann auch Bestandteil des Sprachanalysators 2 sein, der die anliegenden Digitalinformationen in Mehrbitinformationen umsetzt, die der Sendestufe 4 zugeführt werden. Im Ausführungsbeispiel besteht die Sendestufe 4 aus einzelnen anschaltbaren Funktionsgeneratoren, die frequenz- oder amplitudenmoduliert die anliegenden Mehrbitinformationen auf den Träger, in diesem Fall einen Infrarotlichtträger, modulieren. Das modulierte Infrarotlicht wird über die Fotodiode 10 a ausgesendet. Die Fotodiode 10 b auf der Empfängerseite empfängt die modulierten Lichtsignale und führt diese einer Empfängerschaltung 5 zu, in der die Signale demoduliert werden, so daß an deren Ausgang ein der eingegebenen Mehrbitinformation entsprechendes Mehrbitwort anliegt. Das Mehrbitwort wird einem elektronischen Umschalter zugeführt, der anhand des anliegenden Stellbefehles eine Umschaltung auf den zu steuernden Funktionssteller 7 a bis 7 c vornimmt. Die Mehrbitinformation dient zur Einstellung des zu steuernden Funktionsstellers 7 a bis 7c auf den anliegenden Wert.

In dem Ausführungsbeispiel in Fig. 1 sind neben der akustischen Befehlseingabe keine weiteren Funktionstasten am Fernbedienungsgeber vorgesehen. Es sei hiermit veranschaulicht, daß bei entsprechender Auslegung des Sprachanalysators 2 und der Befehlsverarbeitung keine zusätzlichen Funktionsbefehle über Tasten eingegeben werden müssen und damit eine vollwertige Fernsteuerung gegeben ist.

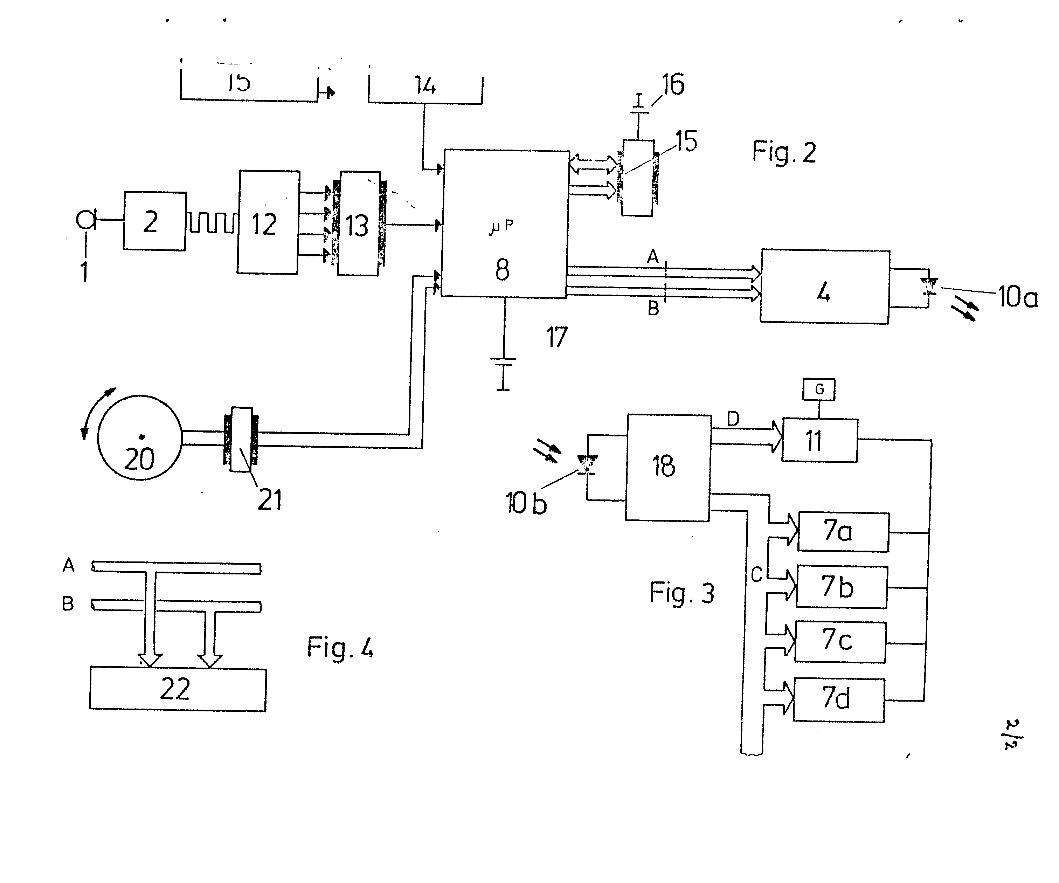

In dem Ausführungsbeispiel in Fig. 2 ist im Fernbedienungsgeber ein Mikroprozessor 8 eingesetzt. Die akustisch eingegebenen Befehlswörter, die vom Mikrofon 1 an den Sprachanalysator 2 weitergegeben werden, werden von diesem nach
Vergleich mit eingegebenen Frequenzen in an sich bekannter
Weise in Digitalinformationen umgesetzt, die nach Matrizierung
in einer Matrixschaltung 12 und Codierung in einer nachgeschalteten Codierschaltung 13, die als Speicherschaltung ausgebildet ist, als Ausgangsmehrbitinformationen seriell in den
Mikrocomputer 8 eingelesen werden, der nach bestimmten Programmen die anliegenden Informationen decodiert. Zur Programmierung ist ein Datenlesegerät 14 vorgesehen, in das ein
Datenträger 15 einführbar ist, auf dem die entsprechenden
Programme gespeichert sind, nach denen eine Auswertung der
anliegenden Befehle erfolgen soll. Der Computer errechnet
nach dem Programm eine Mehrbiteinstellinformation sowie eine
zugeordnete Adresse, die über einen Adressbus A und einen
Datenbus B an die Sendestufe 4 gelegt werden. Parallel dazu
werden sowohl das Programm als auch Festgrößen und der
entsprechende Stellwert in einen nichtflüchtigen Speicher 15
eingespeichert. Dieser weist zu diesem Zweck eine eigene
Energieversorgung 16 auf, die den Speicher über Jahre
funktionsfähig hält. Der Computer selbst wird über die
Batterie 17 versorgt. Die Mehrbiteinstellinformation, die
über den Datenbus an die Sendestufe 4 abgegeben wird, sowie
die Adresse werden seriell oder parallel nach bekannten
Verfahren übertragen. Vorteilhaft ist es dabei, eine HF-
Sendestufe, die die Fotodiode 10 a ansteuert, entsprechend
der anliegenden Digitalimpulse aufzutasten. Die durch die
Diode 10 b auf der Empfängerseite (Fig. 3) empfangenen
Signale werden in der Empfängerschaltung 18 demoduliert und
die Wortinformationen in einen Datenbus C und einen Adressbus D geschoben. Die Adresse steuert einen Adressendecoder
11, der eine Steuerleitung des zu stellenden Funktionsstellers 7 a bis 7 d anschaltet, über die ein Setzimpuls vom Generator G an den Funktionssteller übertragen wird. Die über
den Datenbus anliegende Mehrbitstellinformation wird dabei
gespeichert. Im Ausführungsbeispiel nach Fig. 2 sind zwei
weitere Eingänge des Mikrocomputers durch eine manuelle
Abstimmungseinrichtung belegt. Hierzu ist ein Abstimmrad 20
mit einem mechanischen Impulsgeber vorgesehen, der Impulse
in positiver oder negativer Richtung je nach Drehsinn abgibt,
die in einer Codierschaltung 21 in entsprechende Stellinformationen umgesetzt werden. Diese werden über die Paralleleingänge zum Hauptsteuereingang in den Mikrocomputer 8 eingelesen und von diesem nach den bestimmten Programmen
decodiert, aufgearbeitet und  als Adresse und Mehrbitstellinformation an die Sendestufe 4 übertragen.

In Fig. 4 ist eine Ergänzung dahingehend vorgesehen, daß die
am Adressbus A und Datenbus B anliegenden  Mehrbitinformationen parallel zur Übertragung in einer Sichtanzeige 22
eine Anzeige des eingestellten Wertes in den zugeordneten
Anzeigeelementen bewirken. Dies erfolgt durch die Anzeige
selbst oder durch vorgeschaltete Latch-Bausteine, die die
Informationen für die einzelnen Sichtanzeigen festhalten
und erst bei Änderung die neuen Werte anzeigen. Durch diese
Maßnahme ist es möglich, den akustisch eingegebenen Befehl
in optischer Form anzuzeigen.

- 1 -

Patentansprüche:

1. Fernsteuerung zum Steuern, Ein- und Umschalten von
variablen und festen Gerätefunktionen und Funktionsgrößen
in nachrichtentechnischen Geräten, insbesondere Geräten
der Unterhaltungselektronik, mit einem Fernbedienungsgeber mit Funktionstasten und/oder Analogwertstellern,
über die bei Betätigung Funktionsgeneratoren eingeschaltet werden, deren die Steuerbefehle beinhaltenden
Signale drahtlos oder drahtgebunden vom Fernbedienungsgeber zum Empfänger des zu steuernden Gerätes frequenz-
oder amplitudenmoduliert mittels eines Übertragungsmediums übertragen werden, d a d u r c h   g e k e n n -
z e i c h n e t , daß der Fernbedienungsgeber mit einem
Mikrofon (1) verbunden ist, das an einen im Fernbedienungsgeber eingebauten Sprachanalysator (2) angeschlossen ist,
und daß die akustisch eingegebenen Wortbefehle nach
Umsetzung in elektrische Signale vom Sprachanalysator
nach der Frequenz und nach auswertbaren Wortteilen analysiert werden, wobei die Signale der Wortteile mit eingespeicherten Signalen verglichen werden und bei Koinzidenz ein Steuerbefehl des dem eingegebenen Wortbefehl
entsprechenden Inhalts abgegeben wird, und daß der
Steuerbefehl eine dem Sprachanalysator (2) nachgeschaltete
Sendestufe (4) steuert, derart, daß der Steuerbefehl mit
einem Träger frequenz- oder amplitudenmoduliert wird und
das modulierte Signal leitungslos oder leitungsgebunden
zum Empfänger übertragen wird, und daß die empfangenen
Signale in einem Demodulator demoduliert und die rückgewonnenen Steuerbefehle einem elektronischen Umschalter
(6) zugeführt werden, der entsprechend dem anliegenden
Steuerbefehl den zu steuernden Funktionssteller einschaltet und setzt.

2. Fernsteuerung nach Anspruch 1, d a d u r c h  g e -
   k e n n z e i c h n e t, daß der bei Koinzidenz im
   Sprachanalysator erzeugte Steuerbefehl in einem nachgeschalteten n-Coder in eine Mehrbitinformation umgewandelt wird, die als Stellinformation zum Empfänger
   übertragen wird.

3. Fernsteuerung nach Anspruch 1 oder 2, d a d u r c h
   g e k e n n z e i c h n e t, daß der Sprachanalysator
   (2) die Wortbefehle in für die Folgeschaltung verarbeitbare elektrische Signale direkt umwandelt, die codiert
   oder direkt die Sendestufe (4) steuern.

4. Fernsteuerung nach einem der vorhergehenden Ansprüche,
   d a d u r c h  g e k e n n z e i c h n e t, daß die
   Mehrbitinformationen einzelner Wortbefehle seriell in
   einen Computer (8) eingelesen werden, und daß der
   Computer (8) die anliegenden Mehrbitinformationen nach
   bestimmten eingeschriebenen Programmen decodiert und
   eine Einstellinformation errechnet, die ausgangsseitig
   über einen Datenbus (B) zusammen mit einer an den
   Adressbus (A) abgegebenen Adresse der Sendestufe (4)
   zugeführt wird, und daß die beiden einander zugeordneten
   Mehrbitinformationen seriell oder parallel, leitungslos oder leitungsgebunden auf einen Träger (HF, Infrarotlicht, Ultraschall) frequenz- oder amplitudenmoduliert
   übertragen werden, und daß die empfangenen Signale
   nach Demodulation und Decodierung je einem Datenbus und
   einem Adressbus zugeführt werden, und daß die Adresse
   einen Adressdecoder derart steuert, daß eine mit den zu
   stellenden Funktionsstellern (7a bis 7d) zugeordneten
   Leitung freigeschaltet wird, und daß die an den Dateneingängen der Funktionssteller (7a bis 7d) anliegenden
   Mehrbitinformationen durch Abgabe eines Setzimpulses an
   die Funktionssteller (7a bis 7d) über die Adressleitung
   gesetzt werden.

- 3 -

5. Fernsteuerung nach einem der vorhergehenden Ansprüche in
Verbindung mit einer drahtlosen Übertragung der Befehlssignale, d a d u r c h   g e k e n n z e i c h n e t,
daß die zu übertragenden Einstellinformationen eine
Sendestufe mit einem HF-Generator ansteuern, der eine
Infrarotlichtdiode taktet, und daß die mittels eines
fotosensitiven Elements empfangenen Signale einer
Empfängerschaltung zugeführt werden, die nach Demodulation
die anliegenden Signale in eine Mehrbitstellinformation
zurückwandelt.

Fig.1

Fig. 2

Fig. 3

Fig. 4

| | Europäisches Patentamt | **EUROPÄISCHER RECHERCHENBERICHT** | Nummer der Anmeldung<br>EP 78 10 0963 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 2 312 814</u> (Y.M. BEAU-CHARD & J. STRUTZ)<br><br>* Vollständig * | 1 |
| | ---<br><br>ELECTRONIC ENGINEERING, Vol. 47, Nr. 563, Januar 1975, London, GB, "Verbal input to computer through voice processor", Seite 7<br><br>* Spalte 3 * | 1 |
| | ---<br><br>FUNKSCHAU, Band 47, Heft 17, August 1977, München, DE, W. BAUM "Farbfernsehgerät mit Mikroprozessor-Steuerung", Seiten 763-768<br><br>* Seite 763; Seite 764 "Der Mikrocomputer" * | 2,4,5 |
| | ---<br><br><u>US - A - 4 045 777</u> (E.P. MIER-ZWINSKI und D.W. WORLEY)<br><br>* Zusammenfassung * | 2,4,5 |

### KLASSIFIKATION DER ANMELDUNG (Int.Cl.²)

G 08 C 23/00
H 03 J 1/00//
G 10 L 1/04

### RECHERCHIERTE SACHGEBIETE (Int. Cl.²)

G 08 C 23/00
H 03 J 1/00
G 10 L 1/04

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-03-1979 | ARMSPACH |

EPA form 1503.1 16.78